# EUROPÄISCHE PATENTSCHRIFT

(11) **EP 4 034 452 B1**
(45) Veröffentlichungstag und Bekanntmachung des Hinweises auf die Patenterteilung: **15.11.2023**
(21) Anmeldenummer: 20753924.8
(22) Anmeldetag: 06.08.2020
(51) Int. Cl.: B62D 35/00, B62D 37/02, B60Q 9/00, B60Q 5/00, B60Q 1/26

(54) **VERFAHREN ZUM BETREIBEN EINER LUFTLEITEINRICHTUNG EINES KRAFTWAGENS SOWIE LUFTLEITEINRICHTUNG FÜR EINEN KRAFTWAGEN**
METHOD FOR OPERATING AN AIR GUIDING DEVICE OF A MOTOR VEHICLE, AND AIR GUIDING DEVICE FOR A MOTOR VEHICLE
PROCÉDÉ POUR FAIRE FONCTIONNER UN DISPOSITIF DE GUIDAGE D'AIR D'UN VÉHICULE À MOTEUR, ET DISPOSITIF DE GUIDAGE D'AIR POUR UN VÉHICULE À MOTEUR

(30) Priorität: 27.09.2019 DE 102019006751
(43) Veröffentlichungstag der Anmeldung: 03.08.2022
(73) Patentinhaber: Mercedes-Benz Group AG, 70372 Stuttgart (DE)
(72) Erfinder: LINK, Alexander, 70197 Stuttgart (DE); ULFERTS, Thorsten, 70619 Stuttgart (DE)
(74) Vertreter: Novagraaf Group
(86) Internationale Anmeldenummer: PCT/EP2020/072166
(87) Internationale Veröffentlichungsnummer: WO 2021/058189

(56) Entgegenhaltungen:
- DE-A1-102018 123 481
- DE-A1-102020 003 626
- DE-U1-202009 002 106

## Beschreibung

Die Erfindung betrifft ein Verfahren zum Betreiben einer Luftleiteinrichtung eines Kraftwagens gemäß dem Oberbegriff des Anspruchs 1. Des Weiteren betrifft die Erfindung eine Luftleiteinrichtung für einen Kraftwagen gemäß dem Oberbegriff des Anspruchs 6.

In der aerodynamischen Fahrzeugentwicklung sind neben Luftwiderstand und Kühlungsanforderungen die Auftriebe an der Vorder- und Hinterachse ein entscheidendes Auslegungskriterium. Dies gilt gerade und insbesondere bei leistungsstarken Fahrzeugen, bei welchen der Auftrieb an der Vorder- und/oder Hinterachse häufig mit Luftleiteinrichtungen abgestimmt wird, welche beispielsweise bei höheren Fahrgeschwindigkeiten zur Beeinflussung der Aerodynamik des Kraftwagens aus einer Ausgangsstellung in eine Wirkstellung verlagert werden.

Da derartige ausfahrbare Luftleiteinrichtungen wie oben beschrieben im erheblichen Maße die Aerodynamik und insbesondere den Auf- beziehungsweise Abtrieb an der Vorder- und Hinterachse entscheidend beeinflussen, ist es für die jeweiligen Sitzinsassen des Kraftwagens, in allererster Linie natürlich für den Fahrer, von erheblicher Relevanz, ob sich das jeweilige Luftleitelement in der eingefahrenen Ausgangsstellung oder in der ausgefahrenen Wirkstellung befindet. Es hat sich allerdings gezeigt, dass die jeweiligen Kraftwageninsassen, insbesondere der Fahrer des Kraftwagens, oft nur in sehr geringem Maß die aerodynamischen Komponenten wahrnimmt, obschon diese den bereits erläuterten erheblichen Einfluss auf das Fahrverhalten des Kraftwagens haben. Nicht zuletzt aus Gründen der ökonomischen Fahrweise und der Einsparung an Antriebsenergie ist es somit wünschenswert, den Sitzinsassen, insbesondere dem Fahrer, eine entsprechende Rückmeldung beziehungsweise Information zukommen zu lassen, ob sich das entsprechende Luftleitelement der Luftleiteinrichtung in seiner die Aerodynamik des Kraftwagens beeinflussenden Wirkstellung befindet.

Aus der DE 20 2009 002 106 U1 ist bereits eine Anzeigeeinrichtung bekannt, mittels welcher dem Fahrer eine Rückmeldung darüber gegeben wird, ob sich das jeweilige Luftleitelement in seiner Wirkstellung befindet.

Aus der gattungsbildenden DE 10 2018 006 787 A1 geht ein Kraftwagen mit einer elektromotorisch betreibbaren Antriebsvorrichtung zur Verstellung von beweglichen Fahrzeugkarosserieteilen, insbesondere von Spoilern, hervor, die so ausgestaltet und betreibbar ist, dass mittels ihr ein einem vorgebbaren Anforderungsprofil entsprechendes Betriebsgeräusch erzeugbar ist. Betätigt der Fahrzeugführer den Spoiler im Stadtverkehr oder im Stand per Knopfdruck, um diesen auszufahren, erhält er eine Rückmeldung über den Verstellvorgang in Form eines mittels des Elektromotors erzeugten Betriebsgeräuschs, welches durch hör- und/oder fühlbare Schwingungen wahrnehmbar ist. Der Spoiler ist im Fahrbetrieb geschwindigkeitsabhängig automatisch aus- und eingefahren, wobei in diesem Betriebszustand die Betriebsgeräusche des Elektromotors nicht modelliert werden, da sie aufgrund der Betriebsgeräusche des Kraftwagens ohnehin nicht hörbar sind.

Aufgabe der vorliegenden Erfindung ist es, ein Verfahren sowie eine Luftleiteinrichtung der eingangs beschriebenen Art zu schaffen, mittels welchen dem jeweiligen Sitzinsassen, insbesondere dem Fahrer, auf besonders zuverlässige Weise und ohne Verursachung einer Ablenkung die Verstellung des jeweiligen Luftleitelements der Luftleiteinrichtung rückgemeldet beziehungsweise bereitgestellt werden kann.

Diese Aufgabe wird erfindungsgemäß durch ein Verfahren mit den Merkmalen des Anspruchs 1 sowie durch eine Luftleiteinrichtung mit den Merkmalen des Anspruchs 6 gelöst. Vorteilhafte Ausgestaltungen mit zweckmäßigen und nicht-trivialen Weiterbildungen der Erfindung sind in den abhängigen Ansprüchen beschrieben.

Um ein Verfahren der eingangs beschriebenen Art zu schaffen, bei welchem wenigstens ein Luftleitelement der Luftleiteinrichtung aus einer Ausgangsstellung in eine die Aerodynamik des Kraftwagens beeinflussende Wirkstellung verstellt und mittels einer Rückmeldungseinrichtung für wenigstens einen Kraftwageninsassen, insbesondere den Fahrer, eine Rückmeldung über die Verstellung des Luftleitelements erzeugt wird, ist es vorgesehen, dass die mittels der Rückmeldungseinrichtung erzeugte Rückmeldung über die Verstellung des Luftleitelements als auf den wenigstens einen Kraftwageninsassen wirkende Relativbewegung ausgeübt wird. Demzufolge soll mittels der Rückmeldungseinrichtung eine auf die vestibuläre Wahrnehmung und/oder auf die Mechanorezeptoren und/oder auf die auditive Wahrnehmung der jeweiligen Kraftwageninsassen, insbesondere des Fahrers, wirkende Rückmeldung über die Verstellung des Luftleitelements in die Wirkstellung erzeugt werden, welche vom jeweiligen Kraftwageninsassen/Fahrer aufgrund seiner Sinneswahrnehmung entsprechend erfasst wird. Kern der Erfindung ist es demzufolge, dem jeweiligen Kraftwageninsassen, insbesondere dem Fahrer, ohne Verursachung einer insbesondere visuellen Ablenkung eine entsprechende Rückmeldung beziehungsweise Information oder ein entsprechendes Signal zu geben, welches ihm die erfolgte oder abgeschlossene Stellung des Luftleitelements in die Wirkstellung rückmeldet beziehungsweise erfühlen lässt. Demzufolge soll erfindungsgemäß mittels der Rückmeldungseinrichtung eine Rückmeldung generiert werden, welche die entsprechenden, oben aufgezählten Sinneswahrnehmungen des menschlichen Körpers anspricht, indem eine Relativbewegung des menschlichen Körpers bezogen auf den Kraftwagen oder dergleichen Beeinflussung erzeugt wird. Im Unterschied zum bisherigen Stand der Technik soll dies ohne insbesondere visuelle Ablenkung der Kraftwageninsassen beziehungsweise insbesondere des Fahrers erfolgen, sodass dieser während der Fahrt intuitiv wahrnehmen beziehungsweise fühlen kann, ob eine Verstellung des jeweiligen Luftleitelements der Luftleiteinrichtung gerade erfolgt beziehungsweise erfolgt ist.

Erfindungsgemäß ist vorgesehen, dass die auf den wenigstens einen Kraftwageninsassen wirkende Relativbewegung durch eine Verstellung eines Fahrwerks und/oder einer Sitzanlage des Kraftwagens ausgeübt wird. Wird demzufolge das wenigstens eine Luftleitelement der Luftleiteinrichtung in die Wirkstellung verlagert, so erfolgt damit einhergehend vorzugsweise eine auf den jeweiligen Kraftwageninsassen, insbesondere auf den Fahrer wirkende, insbesondere dynamische, vorzugsweise ruckartige Relativbewegung, welche die Verstellung der Luftleiteinrichtung für den jeweiligen Kraftwageninsassen spürbar und erlebbar werden lässt. Wie bereits erläutert sollen hierdurch die vestibulären Wahrnehmungen und/oder die Mechanorezeptoren und/oder die auditive Wahrnehmung des jeweiligen Kraftwageninsassen angesprochen werden, sodass dieser ohne Ablenkung die Verstellung der Luftleiteinrichtung erfährt. Die hierdurch gegebene Rückmeldung kann dabei lediglich während der Verstellung oder aber auch nachfolgend der Verstellung und dauerhaft erfolgen.

Somit ist vorliegend vorgesehen, beispielsweise das Fahrwerk des Kraftwagens abhängig von der Verstellung des jeweiligen Luftleitelements abzusenken oder andersartig zu beeinflussen, sodass der jeweilige Kraftwageninsasse abhängig von der Verstellung des Luftleitelements eine Relativbewegung erfährt. Diese Relativbewegung ist demzufolge nicht auf andere fahrbetriebsbedingte physikalische Einflüsse zurückzuführen, sondern gezielt beispielsweise mittels des Fahrwerks in Abhängigkeit der Verstellung des Luftleitelements eingeleitet. Demzufolge fungiert im vorliegenden Fall das Fahrwerk beziehungsweise eine zugehörige Steuerungseinrichtung als die Rückmeldungseinrichtung, mittels welcher die erfindungsgemäße vorgesehene Relativbewegung des jeweiligen Kraftwageninsassen erzeugt wird. Alternativ zu dem Fahrwerk kann natürlich auch eine Verstellung insbesondere einer elektrisch verstellbaren Sitzanlage des Kraftwagens entsprechend in Abhängigkeit der Verstellung des jeweiligen Luftleitelements der Luftleiteinrichtung erfolgen, um hierdurch die erfindungsgemäß gewünschte Rückmeldung an den jeweiligen Kraftwageninsassen auszuüben.

Unter Luftleiteinrichtung sind in diesem Zusammenhang sowohl Flügel, welche sowohl ober- und unterseitig von Fahrtwind umströmt werden als auch Spoiler, von welchen nur die Ober- beziehungsweise Unterseite umströmt wird, zu verstehen. Hierbei sind diese Luftleitelemente Teil eines variablen Aerodynamiksystems und können sowohl als separate Anbauteile wie auch als gegebenenfalls integrierte Bauteilbereiche der Außenhaut des Kraftwagens ausgebildet sein.

In weiterer Ausgestaltung der Erfindung hat es sich als vorteilhaft gezeigt, dass nach der auf den wenigstens einen Kraftwageninsassen wirkenden Relativbewegung mittels der Rückmeldungseinrichtung eine Rückverlagerung des wenigstens einen Kraftwageninsassen vorgenommen wird. Demzufolge kann es beispielsweise sein, dass ein Fahrwerk wieder in die ursprüngliche Position verlagert wird, wenn die Fahrstellung des jeweiligen Luftleitelements abgeschlossen ist und/oder wenn sich das Luftleitelement wieder in seiner Ausgangsstellung befindet. Ebenso kann auch ein entsprechend verstellbarer Fahrzeugsitz nach Abschluss der Verstellung des jeweiligen Luftleitelements wieder in seine ursprüngliche Position rückverlagert werden.

Zudem hat es sich als vorteilhaft gezeigt, wenn die mittels der Rückmeldungseinrichtung auf den wenigstens einen Kraftwageninsassen wirkende Relativbewegung während und/oder nach der Verstellung des Luftleitelements in die Wirkstellung ausgeübt wird.

Somit kann dem Sitzinsassen wahlweise die entsprechende Verstellung des Luftleitelements in die Wirkstellung und gegebenenfalls auch das Verbleiben des jeweiligen Luftleitelements in der Wirkstellung rückgemeldet werden. Auch wäre es theoretisch denkbar, die Rückverstellung des jeweiligen Luftleitelements zurück in die Ausgangsstellung entsprechend rückzumelden.

Schließlich hat es sich als vorteilhaft gezeigt, wenn mittels eines Rückmeldeelements der Rückmeldungseinrichtung unmittelbar am Luftleitelement eine visuelle oder auditive Rückmeldung erzeugt wird. Es ist beispielsweise denkbar, in einem entsprechend umströmten Bereich des Luftleitelements einen entsprechenden Störkörper, Klangkörper oder dergleichen vorzusehen, welcher beispielsweise eine auditive Rückmeldung erzeugt, wenn im Fahrbetrieb des Kraftwagens das entsprechende Luftleitelement in die Wirkstellung bewegt wird. Auch können entsprechende Beleuchtungen oder visuelle Rückmeldungen unmittelbar im Bereich des jeweiligen Luftleitelements erzeugt werden, um den entsprechenden Kraftwageninsassen über die Verstellung des jeweiligen Luftleitelements zu informieren.

Bei einer vorteilhaften Ausführungsvariante des Verfahrens ist vorgesehen, dass mittels der Rückmeldungseinrichtung auf den wenigstens einen Kraftwageninsassen eine auf dessen auditive Wahrnehmung wirkende Rückmeldung über die Verstellung des Luftleitelements in dessen Wirkstellung ausgeübt wird. Auch ein derartiges, auditives Signal beziehungsweise eine auditive Rückmeldung hat den Vorteil, dass die jeweiligen Kraftwageninsassen, insbesondere der Fahrer des Kraftwagens, weitaus geringer abgelenkt werden/wird als dies beispielsweise auf visuellem Weg mittels einer Anzeige der Fall ist.

Zur Erfindung gehört auch eine Luftleiteinrichtung für einen Kraftwagen gemäß Anspruch 6. Deren Vorteile ergeben sich aus den bereits beschriebenen Vorteilen in ebensolcher Weise.

Weitere Vorteile und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigen:

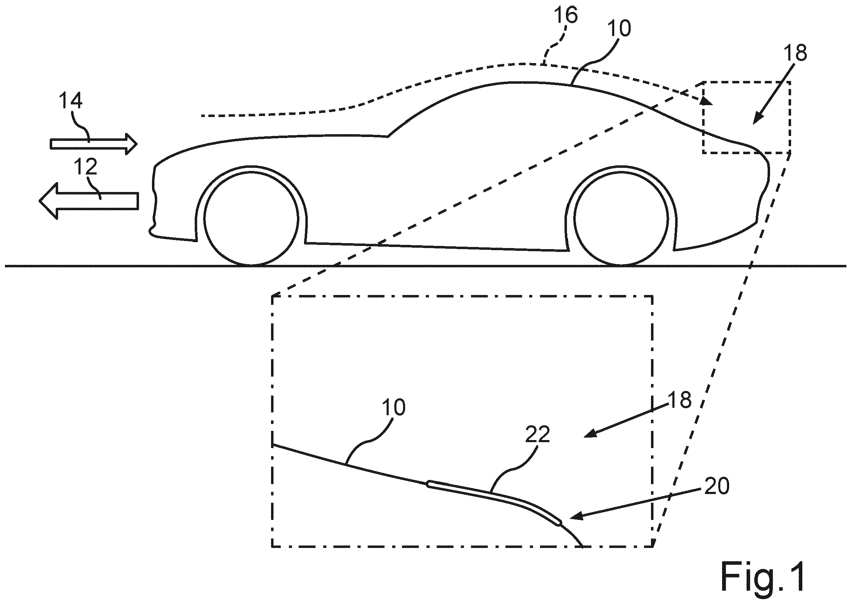

- Fig. 1: eine schematische Seitenansicht auf einen Personenkraftwagen mit einem im Heckbereich vorgesehenen Luftleitelement einer Luftleiteinrichtung, welches vorliegend in einer zumindest im Wesentlichen in die Außenhaut des Kraftwagens integrierte Ausgangsstellung gemäß der ausschnittsweise vergrößerten Detailansicht angeordnet ist; und in

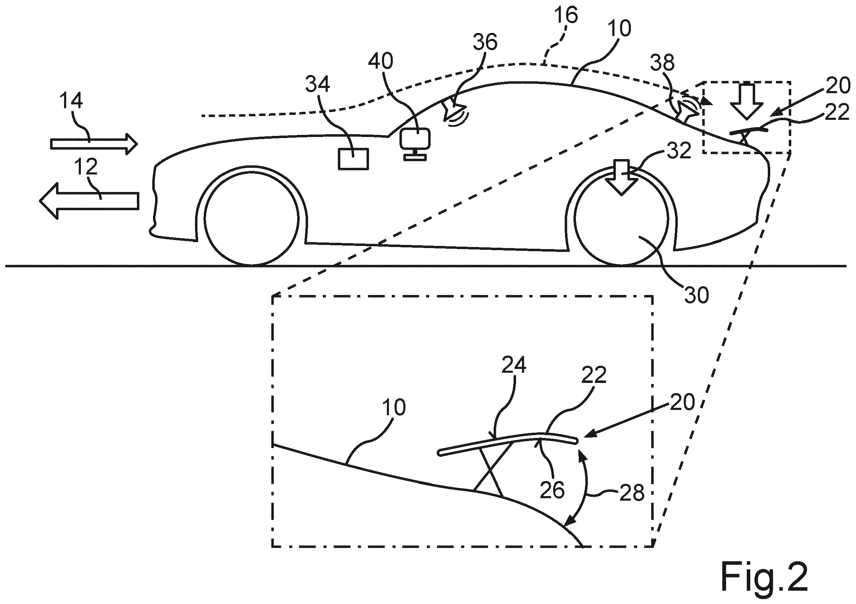

- Fig. 2: eine Seitenansicht auf den Kraftwagen gemäß Fig. 1 sowie auf das in einer ausschnittsweisen und vergrößerten Detailansicht dargestellte Luftleitelement der Luftleiteinrichtung, welches aus der in Fig. 1 gezeigten Ausgangsstellung in eine die Aerodynamik des Kraftwagens beeinflussende Wirkstellung verstellt worden ist, wobei außerdem ein Fahrwerk des Kraftwagens als Rückmeldungseinrichtung fungiert, mittels welchem als Rückmeldung über die Verstellung des Luftleitelements eine Rückmeldung in Form einer auf wenigstens einen Kraftwagen wirkenden Relativbewegung durch Absenken des Kraftwagens an der Hinterachse ausgeübt worden ist.

In den Fig. 1 und 2 ist jeweils in einer schematischen Seitenansicht ein Personenkraftwagen dargestellt. Genauer gesagt ist von dem Personenkraftwagen im Wesentlichen eine die Außenkontur bildende Außenhaut 10 dargestellt, welche bei einer Fahrt des Kraftwagens in einer Fahrtrichtung gemäß einem Pfeil 12 von mit einem Pfeil 14 dargestelltem Fahrtwind angeströmt beziehungsweise gemäß einem Pfeil 16 oberseitig überströmt wird.

Ein Heckbereich 18 des Personenkraftwagens ist gemäß den Fig. 1 und 2 jeweils ausschnittsweise und vergrößert dargestellt. In diesem Heckbereich 18 ist eine Luftleiteinrichtung 20 mit wenigstens einem Luftleitelement 22 vorgesehen, welches in Fig. 1 in einer zumindest im Wesentlichen nicht wirksamen Ausgangsstellung angeordnet ist, in welcher dieses zumindest im Wesentlichen in die Außenhaut 10 des Kraftwagens im Heckbereich 18 integriert ist.

Wie dies in Zusammenschau mit Fig. 2 erkennbar ist, ist das Luftleitelement 22 im vorliegenden Ausführungsbeispiel als Heckflügel ausgebildet, welcher aus der in Fig. 1 dargestellten Ausgangsstellung in die in Fig. 2 dargestellte Wirkstellung verlagerbar ist, in welcher sowohl dessen Oberseite 24 als auch dessen Unterseite 26 angeströmt beziehungsweise von Fahrtwind (Pfeil 16) umströmt wird. Die Verstellung des Luftleitelements 22 beziehungsweise Heckflügels ist dabei durch den Pfeil 28 symbolisch angedeutet. Da der Heckflügel 22 auch wieder in seine Ausgangsstellung rückverlagerbar ist, ist der Pfeil 28 entsprechend als Doppelpfeil gestaltet.

Eine Verstellung des Luftleitelements beziehungsweise Heckflügels 22 der Luftleiteinrichtung 20 erfolgt üblicherweise bei hohen Fahrgeschwindigkeiten beispielsweise oberhalb von 80 oder 120 Kilometern pro Stunde, um beispielsweise Abtrieb an einer Hinterachse 30 zu erzeugen beziehungsweise allgemein die Aerodynamik des Kraftwagens zu beeinflussen. Bei derartigen, aktiven Komponenten zur Beeinflussung der Aerodynamik von Kraftwagen hat es sich allerdings gezeigt, dass die Wahrnehmung der Kraftwageninsassen, insbesondere des Fahrers, ab welchem Zeitpunkt diese aktiven Komponenten beziehungsweise Luftleitelemente 22 jeweiliger Luftleiteinrichtungen 20 ausgefahren und somit aktiv sind, äußerst unterschiedlich beziehungsweise nur in den seltensten Fällen vorhanden sind. Andererseits ist es beispielsweise für das Fahrverhalten des Fahrers und auch des Fahrzeugs von erheblicher Bedeutung, ob sich das jeweilige Luftleitelement 22 bereits in der Wirkstellung befindet oder nicht. Gemäß dem bisherigen Stand der Technik kann sich der Fahrer beispielsweise bislang nur ein Bild darüber machen, wenn er auf eine entsprechende Anzeige im Kombiinstrument seines Personenkraftwagens sieht beziehungsweise wenn er die aktuell gefahrene Geschwindigkeit kontrolliert. Beides ist mit einer zusätzlichen Ablenkung verbunden.

Aus diesem Grund wird vorliegend eine Rückmeldung über die Verstellung des Luftleitelements 22 auf den wenigstens einen Kraftwageninsassen, insbesondere den Fahrer ausgeübt, und zwar in Form einer auf diesen wirkenden Relativbewegung beziehungsweise einer andersartigen, auf dessen vestibuläre Wahrnehmung und/oder auf dessen Mechanorezeptoren und/oder auf dessen auditive Wahrnehmung wirkenden Rückmeldung. Dies bedeutet, dass mittels einer im Weiteren noch näher erläuterten Rückmeldungseinrichtung das Körpergefühl beziehungsweise die Sinneswahrnehmung des jeweiligen Fahrzeuginsassen angesprochen wird, um ihn über die Verstellung des Luftleitelements 22 der Luftleiteinrichtung 20 in Kenntnis zu setzen.

Im konkreten Ausführungsbeispiel erfolgt dies dadurch, dass - wie mit einem Pfeil 32 angedeutet - ein Fahrwerk des Kraftwagens eine entsprechende Relativbewegung durchführt, welche durch die Verstellung des Luftleitelements 22 bedingt ist. Wird demzufolge im vorliegenden Fall das Luftleitelement 22 der Luftleiteinrichtung 20 ausgefahren und demzufolge die Aerodynamik des Kraftwagens beeinflusst, so wird beispielsweise das aktive Fahrwerk des Fahrzeugs gemäß dem Pfeil 32 ruckartig oder dergleichen dynamisch nach unten verfahren. Dadurch kann beispielsweise der Heckabtrieb des Heckflügels 22 spürbar gemacht werden, indem das Herabpressen des Fahrzeugs im Heckbereich kurzzeitig verstärkt beziehungsweise durch das Fahrwerk simuliert wird. Anschließend wird das Fahrwerk nach einer gewissen Zeit beispielsweise wieder in seine ursprüngliche Stellung zurück verlagert.

Im vorliegenden Fall fungiert also das Fahrwerk des Kraftwagens als Rückmeldungseinrichtung, mittels welcher der Kraftwagen im Falle eines Ausfahrens des Luftleitelements 22 gemäß dem Pfeil 32 abgesenkt und somit die entsprechende Relativbewegung auf die Kraftwageninsassen, insbesondere den Fahrer, ausgeübt wird. Umgekehrt wird nach einer gewissen Zeit die ursprüngliche Stellung des Fahrwerks wieder zurückgestellt, also mittels der Rückmeldungseinrichtung (Fahrwerk) eine Rückverlagerung des wenigstens einen Kraftwageninsassen vorgenommen.

Um eine entsprechende Relativbewegung des Kraftwageninsassen beziehungsweise Fahrers mittels des Fahrwerks im Falle der Verstellung des Luftleitelements 22 zu bewerkstelligen, ist vorliegend eine Steuerungseinrichtung 34 der Rückmeldungseinrichtung beziehungsweise des Fahrwerks in den Kraftwagen integriert, die dazu ausgebildet ist, die Rückmeldung über die Verstellung des Luftleitelements 22 als auf den wenigstens einen Kraftwageninsassen wirkenden Relativbewegung zu erzeugen. Hierzu ist die Steuerungseinrichtung entsprechend mit dem Luftleitelement 22 und der Rückmeldungseinrichtung, im vorliegenden Fall das Fahrwerk, in Verbindung.

Alternativ zu dem Fahrwerk wäre es auch denkbar, einen Eingriff in eine elektrische Sitzverstellung eines Fahrzeugsitzes oder dergleichen der Sitzanlage vorzunehmen oder beispielsweise auch einen Eingriff in die Bremsanlage des Kraftwagens. Auch hierdurch können beispielsweise dynamische, insbesondere ruckartige Relativbewegungen des jeweiligen Kraftwageninsassen, insbesondere des Fahrers, erzeugt werden, um ihm eine Information über die Verstellung des jeweiligen Luftleitelements 22 zu geben.

Die entsprechende Rückmeldung kann dabei während der Verstellung des Luftleitelements 22 erfolgen und/oder während des gesamten Betriebs des Luftleitelements 22 in seiner Wirkstellung. Wie im vorliegenden Fall ist es auch denkbar, dass die Relativbewegung des Kraftwageninsassen nach einer gewissen Zeit, in welcher sich das Luftleitelement 22 in seiner Wirkstellung befindet, aufgehoben wird.

In Fig. 2 sind außerdem jeweiligen Lautsprecher 36, 38 im Innenraum des Kraftwagens beziehungsweise außenseitig und im Nahbereich des Luftleitelements 22 dargestellt. Anstelle oder zusätzlich zu der über die Relativbewegung erzeugte Rückmeldung ist es somit auch denkbar, im Falle einer Verstellung des Luftleitelements 22 eine auf die auditive Wahrnehmung des jeweiligen Kraftwageninsassen beziehungsweise Fahrers wirkende Rückmeldung über die Verstellung des Luftleitelements 22 in die Wirkstellung auszuüben. Eine derartige, auditive Rückmeldung hat ähnlich wie eine Relativbewegung, welche auf den Kraftwageninsassen ausgeübt wird, den Vorteil, dass relativ wenig Ablenkung erfolgt. Anstelle des hier gezeigten Lautsprechers 38 an der Außenhaut 10 des Kraftwagens wäre es auch denkbar, ein andersartiges Rückmeldeelement der Rückmeldungseinrichtung unmittelbar oder im Nahbereich des Luftleitelements 22 der Luftleiteinrichtung 20 anzuordnen. Mittels diesem Rückmeldeelement, welches beispielsweise ein akustischer Störkörper oder dergleichen sein könnte, kann somit auf einfache Weise ein auditives Signal beziehungsweise eine auditive Rückmeldung über die Verstellung des Luftleitelements 22 erzeugt werden. Im vorliegenden Fall sind jedoch die Lautsprecher 36, 38 die jeweiligen Rückmeldeelemente der Rückmeldungseinrichtung.

Zusätzlich kann auch eine visuelle Rückmeldung über die Verstellung des Luftleitelements 22 erzeugbar sein, welche beispielsweise durch ein entsprechendes Rückmeldeelement unmittelbar oder im Nahbereich des Luftleitelements 22 erzeugt wird. So wäre beispielsweise eine entsprechende Beleuchtung oder dergleichen des jeweiligen Luftleitelements 22 auch denkbar. Im vorliegenden Fall ist außerdem ein Anzeigeelement 40 im Cockpit des Fahrzeugs erkennbar, auf welchem zusätzlich die Position des Luftleitelements 22 angezeigt sein kann.

Zusammenfassend bleibt festzuhalten, dass das erfindungsgemäße Verfahren insbesondere dafür geeignet und auch vorgesehen ist, während der Fahrt des Kraftwagens eingesetzt zu werden, um dem mindestens einen Fahrzeuginsassen zu vermitteln beziehungsweise auf diesen auszuüben, sobald das Luftleitelement der Luftleiteinrichtung aus einer Ausgangsstellung in eine die Aerodynamik des Kraftwagens beeinflussende Wirkstellung verstellt wird. Dabei ist dies gerade auch bei höheren Geschwindigkeiten des Kraftwagens, also nicht nur im Stand beziehungsweise im Stadtverkehr, vorteilhaft und funktionssicher, sodass das Verfahren bei jeder Geschwindigkeit des Kraftwagens durchführbar ist.

## Patentansprüche

1. Verfahren zum Betreiben einer Luftleiteinrichtung (20) eines Kraftwagens, bei welchem wenigstens ein Luftleitelement (22) der Luftleiteinrichtung (20) aus einer Ausgangsstellung in eine die Aerodynamik des Kraftwagens beeinflussende Wirkstellung verstellt und mittels einer Rückmeldungseinrichtung für wenigstens einen Kraftwageninsassen eine Rückmeldung über die Verstellung des Luftleitelements (22) erzeugt wird,
**dadurch gekennzeichnet, dass**
die mittels der Rückmeldungseinrichtung erzeugte Rückmeldung über die Verstellung des Luftleitelements (22) als auf den wenigstens einen Kraftwageninsassen wirkende Relativbewegung ausgeübt wird, wobei diese Relativbewegung durch eine Verstellung eines Fahrwerks und/oder einer Sitzanlage des Kraftwagens erzeugt wird.

2. Verfahren nach Anspruch 1,
**dadurch gekennzeichnet, dass**
nach der auf den wenigstens einen Kraftwageninsassen wirkenden Relativbewegung mittels der Rückmeldungseinrichtung eine Rückverlagerung des wenigstens einen Kraftwageninsassen vorgenommen wird.

3. Verfahren nach Anspruch 1 oder 2,
**dadurch gekennzeichnet, dass**
die mittels der Rückmeldungseinrichtung auf den wenigstens einen Kraftwageninsassen wirkende Relativbewegung während und/oder nach der Verstellung des Luftleitelements (22) in die Wirkstellung ausgeübt wird.

4. Verfahren nach einem der Ansprüche 1 bis 3,
**dadurch gekennzeichnet, dass**
mittels eines Rückmeldeelements der Rückmeldungseinrichtung unmittelbar am Luftleitelement (22) eine visuelle oder auditive Rückmeldung erzeugt wird.

5. Verfahren einem der Ansprüche 1 bis 4,
**dadurch gekennzeichnet, dass**
mittels der Rückmeldungseinrichtung auf den wenigstens einen Kraftwageninsassen eine auf dessen auditive Wahrnehmung wirkende Rückmeldung über die Verstellung des Luftleitelements (22) in dessen Wirkstellung ausgeübt wird.

6. Luftleiteinrichtung (20) für einen Kraftwagen, mit wenigstens einem Luftleitelement (22) der Luftleiteinrichtung (20), welches aus einer Ausgangsstellung in eine die Aerodynamik des Kraftwagens beeinflussende Wirkstellung verstellbar ist, und mit einer Rückmeldungseinrichtung, mittels welcher auf wenigstens einen Kraftwageninsassen eine Rückmeldung über die Verstellung des Luftleitelements (22) ausübbar ist,
**dadurch gekennzeichnet, dass**
ein Fahrwerk des Kraftwagens und/oder eine Sitzanlage des Kraftwagens als die Rückmeldungseinrichtung mit zugehöriger Steuerungseinrichtung (34) ausgebildet sind/ist, mittels welchen/welchem die Rückmeldung über die Verstellung des Luftleitelements (22) als auf den wenigstens einen Kraftwageninsassen wirkende Relativbewegung erzeugbar ist.

7. Luftleiteinrichtung (20) nach Anspruch 6,
**dadurch gekennzeichnet, dass**
ein Rückmeldeelement der Rückmeldungseinrichtung am Luftleitelement (22) der Luftleiteinrichtung (20) angeordnet ist, mittels welchem eine visuelle oder auditive Rückmeldung über die Verstellung des Luftleitelements (22) erzeugbar ist.

## Claims

1. Method for operating an air-guiding device (20) of a motor vehicle, in which method at least one air-guiding element (22) of the air-guiding device (20) is moved from a starting position into an operative position influencing the aerodynamics of the motor vehicle and feedback regarding the adjustment of the air-guiding element (22) is generated by means of a feedback device for at least one motor vehicle occupant,
**characterized in that**
the feedback regarding the adjustment of the air-guiding element (22) generated by means of the feedback device is exerted as a relative movement acting on the at least one motor vehicle occupant, this relative movement being generated by an adjustment of a chassis and/or a seat system of the motor vehicle.

2. Method according to claim 1,
**characterized in that**
after the relative movement acting on the at least one motor vehicle occupant by means of the feedback device, the at least one motor vehicle occupant is moved back.

3. Method according to either claim 1 or claim 2,
**characterized in that**
the relative movement acting on the at least one motor vehicle occupant by means of the feedback device is exerted into the operative position during and/or after the adjustment of the air-guiding element (22).

4. Method according to any of claims 1 to 3,
**characterized in that**
visual or auditory feedback is generated directly on the air-guiding element (22) by means of a feedback element of the feedback device.

5. Method according to any of claims 1 to 4,
**characterized in that**
feedback regarding the adjustment of the air-guiding element (22) into its operative position that acts on the auditory perception of the at least one motor vehicle occupant is exerted on said motor vehicle occupant by means of the feedback device.

6. Air-guiding device (20) for a motor vehicle, comprising at least one air-guiding element (22) of the air-guiding device (20) which is movable from a starting position into an operative position influencing the aerodynamics of the motor vehicle, and comprising a feedback device by means of which feedback regarding the adjustment of the air-guiding element (22) can be exerted on at least one motor vehicle occupant,
**characterized in that**
a chassis of the motor vehicle and/or a seat system of the motor vehicle are/is designed as the feedback device with an associated control device (34), by means of which the feedback regarding the adjustment of the air-guiding element (22) can be generated as a relative movement acting on the at least one motor vehicle occupant.

7. Air-guiding device (20) according to claim 6,
**characterized in that**
a feedback element of the feedback device is arranged on the air-guiding element (22) of the air-guiding device (20), by means of which feedback element visual or auditory feedback regarding the adjustment of the air-guiding element (22) can be generated.

## Revendications

1. Procédé pour faire fonctionner un dispositif de guidage d'air (20) d'un véhicule automobile, dans lequel au moins un élément de guidage d'air (22) du dispositif de guidage d'air (20) est déplacé d'une position initiale dans une position active influençant l'aérodynamique du véhicule automobile et un retour d'information concernant le déplacement de l'élément de guidage d'air (22) est généré pour au moins un occupant du véhicule automobile au moyen d'un dispositif de retour d'information,
**caractérisé en ce que**
le retour d'information concernant le déplacement de l'élément de guidage d'air (22) généré au moyen du dispositif de retour d'information est exercé comme un mouvement relatif agissant sur l'au moins un occupant du véhicule automobile, ce mouvement relatif étant généré par un déplacement d'un châssis et/ou une sellerie du véhicule automobile.

2. Procédé selon la revendication 1,
**caractérisé en ce que**
après le mouvement relatif agissant sur l'au moins un occupant du véhicule automobile, un retour de l'au moins un occupant du véhicule automobile est effectué au moyen du dispositif de retour d'information.

3. Procédé selon la revendication 1 ou 2,
**caractérisé en ce que**
le mouvement relatif agissant au moyen du dispositif de retour d'information sur l'au moins un occupant du véhicule automobile est exercé pendant et/ou après le déplacement de l'élément de guidage d'air (22) dans la position active.

4. Procédé selon l'une des revendications 1 à 3,
**caractérisé en ce que**
un retour d'information visuel ou auditif est généré directement sur l'élément de guidage d'air (22) au moyen d'un élément de retour d'information du dispositif de retour d'information.

5. Procédé selon l'une des revendications 1 à 4,
**caractérisé en ce que**
un retour d'information concernant le déplacement de l'élément de guidage d'air (22) dans sa position active est exercé au moyen du dispositif de retour d'information sur l'au moins un occupant du véhicule automobile, agissant sur la perception auditive de celui-ci.

6. Dispositif de guidage d'air (20) pour un véhicule automobile, comprenant au moins un élément de guidage d'air (22) du dispositif de guidage d'air (20), lequel peut être déplacé d'une position initiale dans une position active influençant l'aérodynamique du véhicule automobile et comprenant un dispositif de retour d'information, au moyen duquel un retour d'information concernant le déplacement de l'élément de guidage d'air (22) peut être exercé sur au moins un occupant du véhicule automobile,
**caractérisé en ce que**
un châssis du véhicule automobile et/ou une sellerie du véhicule automobile est conçu(e) comme dispositif de retour d'information comprenant un dispositif de commande (34) correspondant, au moyen duquel/de laquelle le retour d'information concernant le déplacement de l'élément de guidage d'air (22) peut être généré comme un mouvement relatif agissant sur l'au moins un occupant de véhicule automobile.

7. Dispositif de guidage d'air (20) selon la revendication 6,
**caractérisé en ce que**
un élément de retour d'information du dispositif de retour d'information est disposé sur l'élément de guidage d'air (22) du dispositif de retour d'information (20), au moyen duquel un retour d'information visuel ou auditif concernant le déplacement de l'élément de guidage d'air (22) peut être généré.
